# EUROPEAN PATENT APPLICATION

(11) **EP 3 486 095 A1**
(43) Date of publication of application: **22.05.2019**
(21) Application number: 17827763.8
(22) Date of filing: 18.07.2017
(51) Int. Cl.: B60C 5/01, C08J 5/12, C09J 161/12, B60C 9/20, B60C 9/02

(54) **TIRE**

(30) Priority: 15.07.2016 JP 2016140564
(71) Applicant: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2017/025965
(87) International publication number: WO 2018/012640

(57) **Abstract**

Provided is a tire (10) including: a tire frame member (12) made of a resin; a reinforcing layer (16) that includes plural reinforcing cords (17) coated with a rubber material, and that is arranged on a tire radial-direction outer side of the tire frame member (12); and an adhesive layer (18) that contains a resin material, and that is arranged between the tire frame member (12) and the reinforcing layer (16).

## Description

### Technical Field

The present invention relates to a tire in which a tire frame member is formed using a resin material.

### Background Art

It has been proposed to use thermoplastic materials, thermoplastic elastomers and the like as tire materials from the standpoints of weight reduction and ease of recycling. As such a tire, for example, Japanese Patent Application Laid-Open (JP-A) No. H05-116504 discloses a pneumatic tire whose main body is molded using a thermoplastic polymer material. According to JP-A No. H05-116504, the pneumatic tire is formed by integrating belt structures, which include reinforcing layers each formed by arranging reinforcing cords obliquely with respect to the tire circumferential direction, along with a tread rubber through vulcanization in a vulcanization mold.

### SUMMARY OF THE INVENTION

### Technical Problem

Incidentally, in the tire disclosed in JP-A No. H05-116504, the outer circumferential surface of a tread-bearing portion is buffed, a cushion rubber is adhered thereto, an adhesive is applied to the cushion rubber, and the reinforcing layers are formed on the outer side thereof. In other words, a resin-made tire frame member and rubber-containing reinforcing layers are adhered using the cushion rubber therebetween. Meanwhile, in JP-A No. H05-116504, no attention is paid to the relationship between the tread-bearing portion of the resin-made tire frame member and the rubber composition-containing reinforcing layers. However, there are many issues in improving the adhesive strength between a resin-made member and a rubber member. Accordingly, there is still room for improvement with regard to adhesion between a resin-made tire frame member and a rubber-containing reinforcing layer.

In view of the above-described facts, an object of the invention is to provide a tire having excellent adhesive strength between a rubber-containing reinforcing layer and a tire frame member made of a resin.

### Solution to Problem

<1> A tire including: a tire frame member made of a resin; a reinforcing layer that includes plural reinforcing cords coated with a rubber material, and that is arranged on a tire radial-direction outer side of the tire frame member; and an adhesive layer that includes a resin material, and that is arranged between the tire frame member and the reinforcing layer.

### Effects of Invention

According to the invention, a tire having excellent an adhesive strength between a rubber-containing reinforcing layer and a tire frame member made of a resin can be provided.

### BRIEF DESCRIPTION OF DRAWINGS

FIG. 1 is a cross-sectional view illustrating the constitution of a tire according to a first embodiment, which is taken along the tire widthwise direction; and
FIG. 2 is a cross-sectional view illustrating the constitution of a tire according to a second embodiment, which is taken along the tire widthwise direction.

### Mode for Carrying Out the Invention

### (Tire)

The tire of the present disclosure includes: a tire frame member made of a resin (i.e., a tire frame member formed using a resin material as a main raw material); a reinforcing layer that includes plural reinforcing cords coated with a rubber material, and that is arranged on a tire radial-direction outer side of the tire frame member; and an adhesive layer that includes a resin material, and that is arranged between the tire frame member and the reinforcing layer. According to the tire of the disclosure, the reinforcing layer that includes reinforcing cords coated with a rubber material is arranged on a tire radial-direction outer side of the tire frame member via the adhesive layer that includes a resin material. Thus, as compared to a case where the reinforcing layer is arranged directly on the tire frame member or a case where an adhesive layer consisting of only a rubber material is arranged, the adhesive strength between the reinforcing layer and the tire frame member can be easily improved. By improving the adhesive strength between the tire frame member and the reinforcing layer in this manner, for example, an excessive peeling force generated between the reinforcing layer and the tire frame member can be suppressed against a force input in the tire widthwise direction. In addition, when a rubber-made tread member is arranged on the reinforcing layer, the tire of the disclosure has an excellent adhesive strength not only between the tire frame member and the reinforcing member but also between the reinforcing layer and the tread member. Therefore, the tire of the disclosure that includes a rubber-made tread member exhibits excellent durability.

### [Tire Frame Member]

The tire frame member is a member that serves as a main body of a resin-made tire. The tire frame member may have, for example, an annular shape. Further, the tire frame member can be configured to include: a pair of bead portions; a pair of side portions extending from the respective bead portions on the tire radial-direction outer side; and a crown portion that connects a tire radial-direction outer end of one of the side portions with a tire radial-direction outer end of the other side portion.

### -Resin Material-

The tire frame member made of a resin is formed using a resin material as a main raw material. The resin material does not encompass a vulcanized rubber. The tire frame member contains the resin material in an amount of preferably not less than 50% by mass, more preferably not less than 70% by mass, particularly preferably not less than 90% by mass, with respect to a total mass of the tire frame member. Examples of the resin material include thermoplastic resins (including thermoplastic elastomers), thermosetting resins, and other general-purpose resins, as well as engineering plastics (including super engineering plastics).

The term "thermoplastic resins (including thermoplastic elastomers)" used herein refers to polymer compounds that are softened and fluidized as the temperature increases and assume a relatively hard and strong state when cooled. In the present specification, thereamong, those polymer compounds that are softened and fluidized as the temperature increases, assume a relatively hard and strong state when cooled, and have a rubber-like elasticity are defined as thermoplastic elastomers. Further, the term "thermosetting resins" used herein refers to polymer compounds that form a three-dimensional network structure and are hardened as the temperature increases. Examples of the thermosetting resins include phenol resins, epoxy resins, melamine resins, and urea resins.

As the thermoplastic resins (including thermoplastic elastomers), for example, those thermoplastic resins and thermoplastic elastomers (TPE) that have an elasticity equivalent to that of a rubber used in an ordinary tire can be used. Taking into consideration the elasticity during travelling and the moldability in the production, it is desirable to use a thermoplastic elastomer.

Examples of the thermoplastic resins include polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), and dynamically cross-linked thermoplastic elastomers (TPV). In the disclosure, it is particularly preferred to use a polyamide-based thermoplastic elastomer as the tire frame member.

The term "polyamide-based thermoplastic elastomer" used herein means a thermoplastic elastomer composed of a copolymer that includes a polymer constituting a part or the entirety of a crystalline high-melting-point hard segment and a polymer constituting a part or the entirety of a non-crystalline low-glass-transition-temperature soft segment, wherein the polymer constituting a part or the entirety of the hard segment has an amide bond (-CONH-) in its main chain.

In such a thermoplastic elastomer, a moiety connecting the hard segment and the soft segment is referred to as "binding moiety".

Examples of the polyamide-based thermoplastic elastomer include materials in which at least a polyamide constitutes a part or the entirety of a crystalline high-melting-point hard segment and other polymer (e.g., a polyester or a polyether) constitutes a part or the entirety of a non-crystalline low-glass-transition-temperature soft segment.

### -Hard Segment-

Examples of the polyamide constituting a part or the entirety of the hard segment include polyamides that are synthesized using a monomer represented by the following Formula (1) or (2).

Formula (1) H₂N-R¹-COOH

In Formula (1), R¹ represents a molecular chain of an aliphatic hydrocarbon (preferably a saturated aliphatic hydrocarbon) having from 2 to 20 carbon atoms, such as an alkylene group having from 2 to 20 carbon atoms. 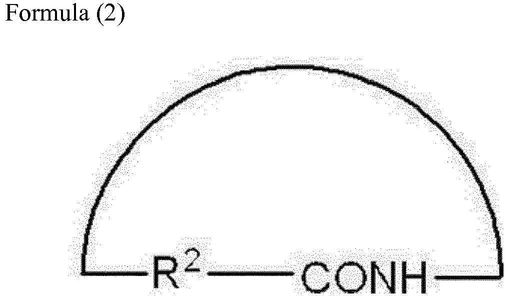 In Formula (2), R² represents a molecular chain of an aliphatic hydrocarbon (preferably a saturated aliphatic hydrocarbon) having from 3 to 20 carbon atoms, such as an alkylene group having from 3 to 20 carbon atoms.

In Formula (1), R¹ is preferably a molecular chain of an aliphatic hydrocarbon having from 3 to 18 carbon atoms, or an alkylene group having from 3 to 18 carbon atoms, more preferably a molecular chain of an aliphatic hydrocarbon having from 4 to 15 carbon atoms, or an alkylene group having from 4 to 15 carbon atoms, particularly preferably a molecular chain of an aliphatic hydrocarbon having from 10 to 15 carbon atoms, or an alkylene group having from 10 to 15 carbon atoms. In Formula (2), R² is preferably a molecular chain of an aliphatic hydrocarbon having from 3 to 18 carbon atoms, or an alkylene group having from 3 to 18 carbon atoms, more preferably a molecular chain of an aliphatic hydrocarbon having from 4 to 15 carbon atoms, or an alkylene group having from 4 to 15 carbon atoms, particularly preferably a molecular chain of an aliphatic hydrocarbon having from 10 to 15 carbon atoms, or an alkylene group having from 10 to 15 carbon atoms.

Examples of the monomer represented by Formula (1) or (2) include *ω*-aminocarboxylic acids and lactams. Further, examples of the polyamide constituting a part or the entirety of the hard segment include polycondensates of *ω*-aminocarboxylic acids, polycondensates of lactams, and co-polycondensates of a diamine and a dicarboxylic acid.

Examples of the *ω*-aminocarboxylic acids include aliphatic *ω*-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactams include aliphatic lactams having from 5 to 20 carbon atoms, such as lauryl lactam, *ε*-caprolactam, undecane lactam, *ω*-enantholactam, and 2-pyrrolidone.

Examples of the diamine include diamine compounds, such as aliphatic diamines having from 2 to 20 carbon atoms (e.g., ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, and 3-methylpentamethylenediamine). The dicarboxylic acid may be represented by HOOC-(R³)ₘ-COOH (R³: a molecular chain of a hydrocarbon having from 3 to 20 carbon atoms, m: 0 or 1), and examples thereof include aliphatic dicarboxylic acids having from 2 to 22 carbon atoms, such as oxalic acid, succinic acid, glutaric acid, adipic acid, pimelic acid, suberic acid, azelaic acid, sebacic acid, and dodecanedioic acid.

Examples of the polyamide constituting a part or the entirety of the hard segment also include a polyamide (Polyamide 6) obtained by ring-opening polycondensation of *ε*-caprolactam, a polyamide (Polyamide 11) obtained by ring-opening polycondensation of undecane lactam, a polyamide (Polyamide 12) obtained by ring-opening polycondensation of lauryl lactam, a polyamide (Polyamide 12) obtained by polycondensation of 12-aminododecanoic acid, and a polyamide (Polyamide 66) obtained by polycondensation of a diamine and a dibasic acid.

Polyamide 6 can be represented by, for example, {CO-(CH₂)₅-NH}ₙ (wherein, n represents an arbitrary number of repeating units), and n is, for example, preferably from 2 to 100, more preferably from 3 to 50.

Polyamide 11 can be represented by, for example, {CO-(CH₂)₁₀-NH}ₙ (wherein, n represents an arbitrary number of repeating units), and n is, for example, preferably from 2 to 100, more preferably from 3 to 50.

Polyamide 12 can be represented by, for example, {CO-(CH₂)₁₁-NH}ₙ (wherein, n represents an arbitrary number of repeating units), and n is, for example, preferably from 2 to 100, more preferably from 3 to 50.

Polyamide 66 can be represented by, for example, {CO(CH₂)₄CONH(CH₂)₆NH}ₙ (wherein, n represents an arbitrary number of repeating units), and n is, for example, preferably from 2 to 100, more preferably from 3 to 50.

The polyamide-based thermoplastic elastomer preferably contains, as the hard segment, a polyamide (Polyamide 12) having a structural unit represented by -[CO-(CH₂)₁₁-NH]-. As described above, Polyamide 12 can be obtained by ring-opening polycondensation of lauryl lactam or polycondensation of 12-aminododecanoic acid.

From the standpoint of melt moldability, the number-average molecular weight of the polymer (polyamide) constituting a part or the entirety of the hard segment is preferably from 300 to 15,000.

### -Soft Segment-

The polymer constituting a part or the entirety of the soft segment (a polymer compound constituting a part or the entirety of the soft segment) may be, for example, a polyester or a polyether. Examples thereof include polyethylene glycols, polypropylene glycols, polytetramethylene ether glycols (PTMG), and ABA-type triblock polyethers, and these polymers may be used singly, or in combination of two or more kinds thereof.

The polymer constituting a part or the entirety of the soft segment may be a polymer having a functional group introduced to a terminal. The functional group may be any group as long as it reacts with a terminal group of a compound (e.g., a polymer constituting a part or the entirety of the hard segment, or a chain extender) that is allowed to react with the polymer constituting a part or the entirety of the soft segment. For example, when a terminal group of the compound that is allowed to react with the polymer constituting a part or the entirety of the soft segment is a carboxy group, the functional group may be an amino group or the like. Further, for example, when a terminal group of the compound that is allowed to react with the polymer constituting a part or the entirety of the soft segment is an amino group, the functional group may be a carboxy group or the like.

Examples of a polymer constituting a part or the entirety of the soft segment in which an amino group is introduced to a terminal group include polyether diamines obtained by allowing ammonia or the like to react with terminals of a polyether, and specific examples thereof include ABA-type triblock polyether diamines. Further, examples of a polymer constituting a part or the entirety of the soft segment in which a carboxy group is introduced to a terminal group include polyether dicarboxylic acids obtained by converting terminal hydroxyl groups of a polyether into carboxy groups by an oxidation reaction, and specific examples thereof include ABA-type triblock polyether dicarboxylic acids.

Examples of the "ABA-type triblock polyether" include polyethers represented by the following Formula (3).

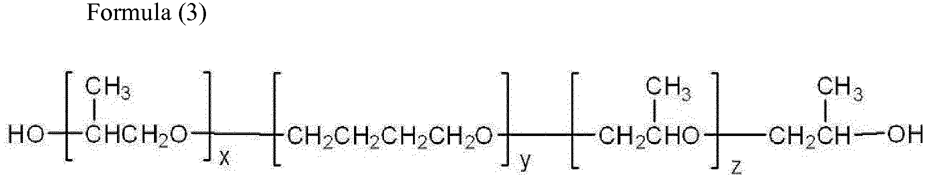

In Formula (3), each of x and z independently represents an integer of 1 to 20, and y represents an integer of 4 to 50.

In Formula (3), each of x and z is preferably an integer of 1 to 18, more preferably an integer of 1 to 16, particularly preferably an integer of 1 to 14, most preferably an integer of 1 to 12. Further, in Formula (3), y is preferably an integer of 5 to 45, more preferably an integer of 6 to 40, particularly preferably an integer of 7 to 35, most preferably an integer of 8 to 30.

Examples of the "ABA-type triblock polyether diamines" include polyether diamines represented by the following Formula (N). 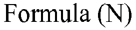 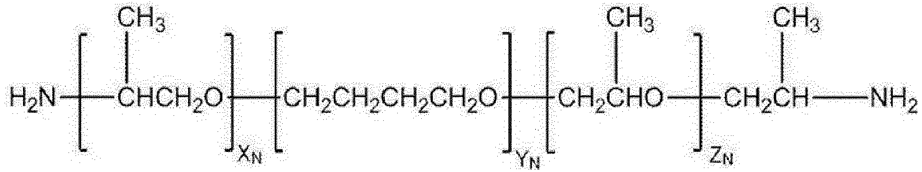 In Formula (N), each of X_{N} and Z_{N} independently represents an integer of 1 to 20, and Y_{N} represents an integer of 4 to 50.

In Formula (N), each of X_{N} and Z_{N} is preferably an integer of 1 to 18, more preferably an integer of 1 to 16, particularly preferably an integer of 1 to 14, most preferably an integer of 1 to 12. Further, in Formula (N), Y_{N} is preferably an integer of 5 to 45, more preferably an integer of 6 to 40, particularly preferably an integer of 7 to 35, most preferably an integer of 8 to 30.

The polymer constituting a part or the entirety of the soft segment may also contain, as a monomer unit, a diamine such as a branched-type saturated diamine having from 6 to 22 carbon atoms, a branched alicyclic diamine having from 6 to 16 carbon atoms, or a norbornane diamine. The branched-type saturated diamine having from 6 to 22 carbon atoms, branched alicyclic diamine having from 6 to 16 carbon atoms, or norbornane diamine may be used singly or in combination of two or more kinds thereof, and these diamines may be used in combination with any of the above-described ABA-type triblock polyethers and ABA-type triblock polyether diamines.

Examples of the branched-type saturated diamine having from 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, and 2-methyl-1,8-diaminooctane.

Examples of the branched alicyclic diamine having from 6 to 16 carbon atoms include 5-amino-2,2,4-trimethyl-1-cyclopentane methylamine and 5-amino-1,3,3-trimethylcyclohexane methylamine. These diamines may each be in the cis-form or the trans-form, and may each be a mixture of these isomers.

Examples of the norbornane diamine include 2,5-norbornane dimethylamine, 2,6-norbornane dimethylamine, and mixtures thereof.

Further, the polymer constituting a part or the entirety of the soft segment may also contain a diamine compound other than the above-described ones as a monomer unit. Examples of such other diamine compound include aliphatic diamines, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, and 3-methylpentane methylenediamine; alicyclic diamines, such as bis(4-aminocyclohexyl)methane, bis(4-aminocyclohexyl)propane, 1,3-bis-aminomethylcyclohexane, and 1,4-bis-aminomethylcyclohexane; and aromatic diamines, such as *m*-xylylenediamine and *p*-xylylenediamine.

These diamines may be used singly, or in combination of two or more kinds thereof as appropriate.

It is noted here, however, that the polymer constituting a part or the entirety of the soft segment preferably contains no aromatic ring from the standpoint of light resistance.

From the standpoints of toughness and low-temperature flexibility, the weight-average molecular weight of the polymer constituting a part or the entirety of the soft segment is preferably from 200 to 6,000, more preferably from 1,000 to 6,000, particularly preferably from 3,000 to 6,000.

Examples of a combination of the hard segment and the soft segment include combinations of any of the above-described hard segments and any of the above-described soft segments. Thereamong, a combination of a ring-opened polycondensate of lauryl lactam and a polyethylene glycol, a combination of a ring-opened polycondensate of lauryl lactam and a polypropylene glycol, a combination of a ring-opened polycondensate of lauryl lactam and a polytetramethylene ether glycol, a combination of a ring-opened polycondensate of lauryl lactam and an ABA-type triblock polyether, a combination of a ring-opened polycondensate of lauryl lactam and an ABA-type triblock polyether diamine, a combination of a polycondensate of aminododecanoic acid and a polyethylene glycol, a combination of a polycondensate of aminododecanoic acid and a polypropylene glycol, a combination of a polycondensate of aminododecanoic acid and a polytetramethylene ether glycol, a combination of a polycondensate of aminododecanoic acid and an ABA-type triblock polyether, and a combination of a polycondensate of aminododecanoic acid and an ABA-type triblock polyether diamine are preferred. Among these combinations, a combination of a ring-opened polycondensate of lauryl lactam and an ABA-type triblock polyether, a combination of a ring-opened polycondensate of lauryl lactam and an ABA-type triblock polyether diamine, a combination of a polycondensate of aminododecanoic acid and an ABA-type triblock polyether, and a combination of a polycondensate of aminododecanoic acid and an ABA-type triblock polyether diamine are particularly preferred.

### -Binding Moiety-

The binding moiety of the polyamide-based thermoplastic elastomer may be, for example, a moiety bound by an aromatic ring-containing chain extender.

Examples of the aromatic ring-containing chain extender include aromatic dicarboxylic acids and derivatives thereof; aromatic diamines; aromatic diols; and aromatic diisocyanates.

Specific examples of the aromatic dicarboxylic acids include phthalic acid, isophthalic acid, terephthalic acid, phenylene diacetic acid, naphthalenedicarboxylic acids (e.g., 2,6-naphthalenedicarboxylic acid, 2,7-naphthalenedicarboxylic acid, 1,4-naphthalenedicarboxylic acid, and 2,3-naphthalenedicarboxylic acid), biphenyldicarboxylic acid (e.g., 4,4-biphenyldicarboxylic acid and 2,2-biphenyldicarboxylic acid), anthracenedicarboxylic acids (e.g., 2,6-anthracenedicarboxylic acid and 2,7-anthracenedicarboxylic acid), pyrenedicarboxylic acids (e.g., 4,8-pyrenedicarboxylic acid and 1,6-pyrenedicarboxylic acid), triphenylenedicarboxylic acids (e.g., 2,7-triphenylenedicarboxylic acid and 1,7-triphenylenedicarboxylic acid), and porphyrin dicarboxylic acids (e.g., 21H,23H-porphyrin-2,12-dicarboxylic acid).

Specific examples of the aromatic diamines include *o*-phenylenediamine, m-phenylenediamine, *p*-phenylenediamine, *m*-xylylenediamine, *p*-xylylenediamine, 1,4-naphthalenediamine, 1,5-naphthalenediamine, 2,6-naphthalenediamine, 2,7-naphthalenediamine, and anthracene-9,10-diacetic acid.

Specific examples of the aromatic diols include *o*-dihydroxybenzene, *m*-dihydroxybenzene, *p*-dihydroxybenzene, 1,4-naphthalenediol, 1,5-naphthalenediol, 2,6-naphthalenediol, 2,7-naphthalenediol, bisphenol A, an ethylene oxide adduct of bisphenol A, a propylene oxide adduct of bisphenol A, and 9,10-dihydroxymethylanthracene.

Specific examples of the aromatic diisocyanates include 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, xylylene diisocyanate, tetramethylxylylene diisocyanate, 2,6-diisopropylphenyl isocyanate, and 1,3,5-triisopropylbenzene-2,4-diisocyanate.

### -Molecular Weight-

From the standpoints of rim fittability and melt viscosity, the weight-average molecular weight of the polyamide-based thermoplastic elastomer is, for example, preferably from 5,000 to 200,000 or so, more preferably from 20,000 to 160,000. The weight-average molecular weight of the polyamide-based thermoplastic elastomer can be measured by gel permeation chromatography (GPC) using, for example, "HLC-8320GPC EcoSEC" manufactured by Tosoh Corporation.

In the polyamide-based thermoplastic elastomer, the mass ratio (HS/SS) of the hard segment (HS) to the soft segment (SS) is preferably from 30/70 to 90/10 from the standpoints of moldability and the like, more preferably from 54/46 to 88/12 and particularly preferably from 52/46 to 75/25 from the standpoints of rim fittability and low-loss property.

The content of the hard segment in the polyamide-based thermoplastic elastomer is preferably from 5% by mass to 95% by mass, more preferably from 10% by mass to 90% by mass, particularly preferably from 15% by mass to 85% by mass, with respect to the total amount of the polyamide-based thermoplastic elastomer.

The content of the soft segment in the polyamide-based thermoplastic elastomer is preferably from 5% by mass to 95% by mass, more preferably from 10% by mass to 90% by mass, particularly preferably from 15% by mass to 85% by mass, with respect to the total amount of the polyamide-based thermoplastic elastomer.

When the above-described chain extender is used, the content thereof is preferably set such that the terminal groups (e.g., hydroxyl group or amino group) of the polymer constituting a part or the entirety of the soft segment and the groups (e.g., carboxyl group) in the chain extender which bind with the terminal groups of the soft segment are substantially equimolar.

The polyamide-based thermoplastic elastomer may also have a binding moiety containing no aromatic ring in addition to an aromatic ring-containing binding moiety. The ratio (mass ratio) of the aromatic ring-containing binding moiety with respect to all binding moieties contained in the polyamide-based thermoplastic elastomer is, for example, from 1% by mass to 100% by mass, desirably from 3% by mass to 100% by mass.

The polyamide-based thermoplastic elastomer can be synthesized by copolymerizing, by a known method, the polymer constituting a part or the entirety of the hard segment and the polymer constituting a part or the entirety of the soft segment using the chain extender.

For example, the polyamide-based thermoplastic elastomer can be obtained by polymerizing monomers constituting a part or the entirety of the hard segment (e.g., a *ω*-aminocarboxylic acid such as 12-aminododecanoic acid, and a lactam such as lauryl lactam) and a chain extender (e.g., adipic acid or decanedicarboxylic acid) in a vessel and subsequently further polymerizing the resultant with an addition of a polymer constituting a part or the entirety of the soft segment (e.g., a polypropylene glycol, an ABA-type triblock polyether, or a diamine obtained by modifying the terminals thereof into amino groups).

### [Reinforcing Layer]

The tire of the disclosure has a reinforcing layer that includes plural reinforcing cords coated with a rubber material and is arranged on a tire radial-direction outer side of the above-described tire frame member. The reinforcing layer that includes plural reinforcing cords coated with a rubber material may be a so-called spiral belt layer formed by spirally winding reinforcing cords coated with a rubber material in the tire circumferential direction. Alternatively, the reinforcing layer may be a so-called intersecting belt layer that is arranged in an inclined manner with respect to the tire rotation axis of the tire frame member and includes plural reinforcing cords coated with a rubber material. The intersecting belt layer has a layered structure including plural layers, and the reinforcing cords contained in one of the plural layers and the reinforcing cords contained in other layer(s) can be arranged such that they intersect with each other between the layers.

### -Rubber Material-

The rubber material may be, for example, a diene-based rubber or a non-diene-based rubber. The diene-based rubber is not particularly restricted, and examples thereof include natural rubbers (NR), butadiene rubbers (BR), isoprene rubbers (IR), styrene-butadiene rubbers (SBR), and acrylonitrile-butadiene rubbers (NBR). Examples of the non-diene-based rubbers include butyl rubbers (IIR) and ethylene-propylene rubbers (EPM, EPDM). The rubber material is preferably a non-diene-based rubber. Further, the rubber material is preferably vulcanized.

In the reinforcing material, various additives generally added to tires and other rubber compositions, such as carbon blacks, vulcanizing agents, vulcanization accelerators, various oils, age resistors and plasticizers, can be incorporated in addition to the rubber material. The rubber material containing these additives can be kneaded and vulcanized by a commonly-used method.

### -Reinforcing Cords-

As the reinforcing cords, for example, monofilaments (single filaments) of metal fibers, organic fibers or the like, or multifilaments (stranded filaments) such as steel cords obtained by twisting steel fibers or cords formed by twisting fibers (e.g., organic fibers) can be used. The diameter and end count of the reinforcing cords can be set as appropriate in accordance with the structure of the reinforcing layer, the type of a cord member to be used, and the type of the tire. For coating the reinforcing cords with the rubber material, any known method can be employed as appropriate. For example, the reinforcing layer can be formed by winding the reinforcing cords coated with an unvulcanized rubber material on the tire frame member to form an unvulcanized reinforcing layer and subsequently vulcanizing the rubber material coating the reinforcing cords.

Specifically, the reinforcing cords coated with an unvulcanized rubber material is spirally wound on the tire frame member along the tire circumferential direction, and the unvulcanized rubber material is subsequently vulcanized, whereby a so-called spiral layer can be formed. Alternatively, for example, a so-called intersecting belt layer can be formed by arranging a plate-form member (ply), in which the reinforcing cords are arrayed in an unvulcanized rubber material such that they are inclined with respect to the tire rotation axis of the tire frame member, on the outer circumferential surface of the tire frame member and subsequently vulcanizing the unvulcanized rubber material. The intersecting belt layer may also be formed by arranging two or more plate-form members in layers in the tire thickness direction such that the reinforcing cords have different inclination angles between the layers.

### [Adhesive Layer]

The adhesive layer contains a resin material and is arranged between the tire frame member and the reinforcing layer. The adhesive layer plays a role in adhering the rubber material-containing reinforcing layer with the tire frame member made of a resin and thereby immobilizing the reinforcing layer on the tire frame member.

The shape of the adhesive layer is not particularly restricted, and the adhesive layer can be formed by applying the resin material constituting the adhesive layer onto the outer circumferential surface of the tire frame member using a coating means or the like. The above-described reinforcing layer may be partially embedded in the adhesive layer. The adhesive layer may also be formed by applying and then heating the resin material, or by pasting a belt-form adhesive layer prepared in advance onto the outer circumferential surface of the tire frame member along the circumferential direction.

The thickness of the adhesive layer in the tire radial direction is not particularly restricted. The adhesive layer may be a single layer, or may have a layered structure in which plural layers are disposed in the tire radial direction. It is preferred that the adhesive layer is formed continuously along the tire circumferential direction and the tire widthwise direction on the outer circumferential surface of the tire frame member.

The thickness of the adhesive layer can be determined based on a value obtained by performing an operation of measuring the thickness of the adhesive layer at a tire widthwise cross-section at arbitrary 10 spots and calculating the arithmetic mean of the values of the adhesive layer thickness measured at the 10 spots.

The resin material contained in the adhesive layer is not particularly restricted as long as it is capable of adhering the rubber material contained in the reinforcing layer and the resin material contained in the tire frame member. For example, the adhesive layer can be formed using an adhesive. In other words, as the resin material contained in the adhesive layer, a resin derived from the above-described adhesive can be used.

The adhesive is particularly preferably a resorcinol-formalin-latex-based (resorcinol-formaldehyde-latex; hereinafter, may be referred to as "RFL-based" as appropriate) adhesive.

### <Resorcinol-Formaldehyde-Latex-Based (RFL-Based) Adhesive>

The resorcinol-formaldehyde-latex-based adhesive (resorcinol-formalin-latex-based adhesive) is an adhesive containing a resorcinol-formaldehyde-latex (RFL) as a main component. The RFL is a solution of a composition containing a resorcinol-formaldehyde condensate obtained by a resol-forming reaction and a latex. The RFL is preferably a solution of a composition consisting of only a resorcinol-formaldehyde condensate obtained by a resol-forming reaction and a latex. The resorcinol-formaldehyde condensate is a reaction product obtained by subjecting resorcinol and formaldehyde, or a relatively low-molecular-weight resorcinol-formaldehyde condensate and formaldehyde, to resorcinol-formaldehyde condensation by a so-called resol-forming reaction. The RFL contains a structural unit derived from formaldehyde and a structural unit derived from resorcinol, and maintains a state where the structural unit derived from formaldehyde is stoichiometrically deficient, whereby a resin member can be maintained to have a low molecular weight and be soluble.

Examples of the latex contained in the RFL include an acrylic rubber latex, an acrylonitrile-butadiene rubber latex, an isoprene rubber latex, a urethane rubber latex, an ethylene-propylene rubber latex, a butyl rubber latex, a chloroprene rubber latex, a silicone rubber latex, a styrene-butadiene rubber latex, a natural rubber latex, a vinylpyridine-styrene-butadiene rubber latex, a butadiene rubber latex, a butyl rubber latex, a carboxylated butadiene-styrene copolymer latex or a chlorosulfonated polyethylene latex, and a nitrile rubber latex. Thereamong, from the standpoint of adhesion with the rubber material, a vinylpyridine-styrene-butadiene rubber latex is preferred. Further, in this case, a copolymer rubber latex having a double structure formed by two-stage polymerization of vinylpyridine, styrene and butadiene is more preferred. These latexes may be used singly or in combination of two or more kinds thereof, and they may be allowed to coexist in a reaction system used for a reaction of resorcinol and formaldehyde prior to the reaction.

The copolymer rubber latex having a double structure formed by two-stage polymerization of vinyl pyridine, styrene and butadiene is a copolymer rubber latex of vinylpyridine, styrene and butadiene, and can be obtained by, for example, (i) polymerizing a monomer mixture having a styrene content of from 10% by mass to 60% by mass, a butadiene content of less than 60% by mass and a vinylpyridine content of from 0.5% by mass to 15% by mass, and subsequently (ii) polymerizing a monomer mixture having a styrene content of from 10% by mass to 40% by mass, a butadiene content of from 45% by mass to 75% by mass and a vinylpyridine content of from 5% by mass to 20% by mass, at a styrene content lower than the styrene content used in the polymerization in (i).

The RFL-based adhesive has a structure in which a polymer compound obtained by subjecting a resorcinol-formaldehyde condensate to resol formation is sufficiently entangled with a latex in a three-dimensional manner. Accordingly, in the preparation of the RFL-based adhesive, it is preferred to perform the resol-forming reaction in a solution in which the latex is dispersed. As the solution in which the latex is dispersed, an acidic, neutral, or alkaline aqueous solution, or an organic solvent such as acetone or alcohol can be used. As the solution in which the latex is dispersed, because of the low water solubility of the latex in the neutral pH region and for the purpose of sufficiently performing a resorcinol-formaldehyde condensation reaction (resol-forming reaction) in aging, it is preferred to use an alkaline or neutral aqueous solution. The resol-forming reaction is performed usually at a pH of 8.0 or higher, preferably in a pH range of from 8.5 to 10.0.

As the alkaline aqueous solution, one obtained by dissolving sodium hydroxide, lithium hydroxide, potassium hydroxide, ammonium hydroxide, or an organic amine (e.g., monomethylamine or ammonia) in water can be used. As the neutral aqueous solution, one in which an arbitrary anionic surfactant is dispersed using a ball mill or a sand mill can be used.

Examples of a method of allowing the resorcinol-formaldehyde condensate to react under mixing with the latex include a method of mixing raw materials of the resorcinol-formaldehyde condensate (e.g., resorcinol, a relatively low-molecular-weight resorcinol-formaldehyde condensate, and formaldehyde) and the latex in an alkaline aqueous solution; and a method in which a resol-forming reaction is initiated with raw materials of the resorcinol-formaldehyde condensate in an alkaline aqueous solution without mixing them with the latex at the start of the reaction, and the resulting reaction intermediate having a low condensation degree is mixed with the latex in an early stage of the reaction to allow the reaction to continue.

The molar ratio (F/R) of formaldehyde (F) and resorcinol (R) in the RFL liquid, the ratio (RF/L) of the total mass (RF) of resorcinol and formaldehyde with respect to the solid mass (L) of the whole latex, and the like can be selected as appropriate in accordance with the intended purpose.

Adhesion of the tire frame member made of a resin and the rubber material-containing reinforcing layer via the adhesive layer can be completed by, for example, applying a resin material (adhesive) yielding the adhesive layer to an unvulcanized rubber material or tire frame member, pasting members thereto, and subsequently performing a heat treatment or the like of the resultant as required. In addition, a pretreatment may be performed on each member prior to the application of the adhesive. Examples of the pretreatment include a treatment with an electron beam, a treatment with a microwave, a corona discharge treatment, a plasma discharge treatment, and a degreasing treatment. The pretreatment can also be performed simply by buffing, filing or the like. In the formation of the adhesive layer, examples of a method of applying the adhesive include a dipping method, a bar coating method, a kneader coating method, a curtain coating method, a roller coating method, and a spin coating method.

The adhesive strength between the tire frame member and the reinforcing layer can be determined by, for example, a method according to JIS K6854-3: (1999) for a test piece prepared by adhering the respective members via the adhesive layer. As a test method, the adhesive strength (kN/m) can be determined by performing a peeling test using a test piece obtained by adhering the resin material to both sides of a single rubber piece via the adhesive layer, instead of using, as a test piece, a sample having a structure in which a rubber piece corresponding to the rubber material and a resin piece corresponding to the resin member are simply adhered and layered via the adhesive layer. After the peeling test, a broken or peeled part can be confirmed by visually observing the test piece. The adhesive strength between the tire frame member and the reinforcing layer is desirably, for example, not less than 20 kN/m. When a sufficient adhesive strength is attained between the tire frame member and the reinforcing layer, interfacial peeling between the tire frame member, the adhesive layer and the reinforcing layer is suppressed, allowing cohesive failure to occur.

### [First Embodiment]

In the following, a first embodiment of the disclosure is described referring to a drawing. In the drawing, an arrow W represents a direction parallel to the tire rotation axis (hereinafter, may be referred to as "tire widthwise direction"), and an arrow S represents a direction that runs through the tire rotation axis and is perpendicular to the tire widthwise direction (hereinafter, may be referred to as "tire radial direction"). The term "radial direction" used herein refers to a direction perpendicular to the tire circumferential direction. Further, a dash-dotted line CL represents the tire center line.

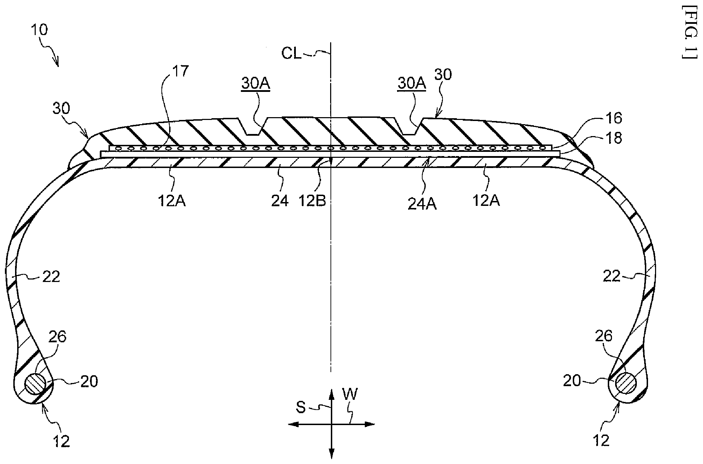

The constitution of a tire according to the first embodiment will now be described. FIG. 1 is a cross-sectional view illustrating the constitution of the tire according to the first embodiment, which is taken along the tire widthwise direction. As illustrated in FIG. 1, a tire 10 according to the first embodiment includes: a tire frame member 12 made of a resin (i.e., formed using a resin material as a main raw material); a spiral belt layer 16; an adhesive layer 18; and a tread rubber 30. The spiral belt layer 16 includes plural reinforcing cords 17 coated with a rubber material.

### (Tire Frame Member)

The tire frame member 12, which is formed from a resin material alone, is configured to have a circular shape by joining together a pair of tire pieces 12A in the tire widthwise direction. The tire frame member 12 may also be formed by joining together three or more tire pieces 12A. The circumferential direction, the widthwise direction and the radial direction of the tire frame member 12 correspond to the tire circumferential direction, the tire widthwise direction and the tire radial direction, respectively.

The tire frame member 12 includes: a pair of bead portions 20; a pair of side portions 22, which extend from the respective bead portions 20 on the tire radial-direction outer side; and a crown portion 24, which extends from the side portions 22 on the tire widthwise-direction inner side. It is noted here that the portions extending from each tire radial-direction inner end of the tire frame member 12 to a position of 30% of the cross-sectional height are referred to as "bead portions 20", the portion where the tread rubber 30 is arranged is referred to as "crown portion 24", and the portions connecting the respective bead portions 20 with the crown portion 24 are referred to as "side portions 22".

As the resin material constituting the tire frame member 12, as described above, a thermoplastic resin, a thermoplastic elastomer (TPE), a thermosetting resin or the like, which has an elasticity equivalent to a rubber used in an ordinary tire, can be used. Taking into consideration the elasticity during travelling and the moldability in the production, it is desirable to use a thermoplastic elastomer. The entirety of the tire frame member 12 may be formed from the resin material alone, or only a part of the tire frame member 12 may be formed from the resin material. In this embodiment, a polyamide-based thermoplastic elastomer is used.

The bead portions 20 partially come into contact with a rim (not illustrated) when the tire 10 is fitted to the rim. In the bead portions 20, bead cores 26 are each embedded. The bead cores 26 are each formed by winding a bead cord plural times into an annular shape or by molding a cable cord obtained by twisting plural bead cords into an annular shape. As a material constituting the bead cores 26, for example, a metal, organic fibers, resin-coated organic fibers, or a hard resin can be used. It is noted here that the bead cores 26 may be omitted as long as the rigidity of the bead portions 20 is ensured and there is no problem in fitting the bead portions 20 with a rim.

The side portions 22 are positioned on each side of the tire widthwise direction of the tire frame member 12 and extend on the tire radial-direction outer side of the pair of the bead portions 20. The side portions 22 are gently curved from the respective bead portions to the crown portion 24 in such a manner to form a convex shape toward the tire axial-direction outer side.

The crown portion 24 is a portion connecting the tire radial-direction outer end of one side portion 22 with the tire radial-direction outer end of the other side portion 22, and supports the tread rubber 30 arranged on the tire radial-direction outer side. In this embodiment, the crown portion 24 has a substantially constant thickness and is configured such that its tire radial-direction outer surface (outer circumferential surface 24A in FIG. 1) is flat along the tire widthwise direction. In other words, the outer circumferential surface 24A of the crown portion 24 has a substantially constant distance to the tire axis over its entirety along the tire widthwise direction from one end to the other end. The outer circumferential surface 24A of the crown portion 24 of this embodiment is a part where the below-described adhesive layer 18 and spiral belt layer 16 are arranged.

In this embodiment, the outer circumferential surface 24A of the crown portion 24 is formed in a flat shape along the tire widthwise direction; however, the disclosure is not restricted to this configuration, and the outer circumferential surface 24A is not required to be formed in a flat shape along the tire widthwise direction. For example, the outer circumferential surface 24A of the crown portion 24 may be formed in a curved shape (having a circular arc cross-section) that is convex toward the tire radial-direction outer side.

The tire frame member 12 is formed by fusing together a pair of tire pieces 12A at a tire widthwise-direction center part 12B of the crown portion 24. It is noted here that the tire frame member 12 may be formed by joining together the tire pieces 12A via a resin-made joining member arranged in the vicinity of the tire widthwise-direction center part of the crown portion 24. As the joining member, a thermoplastic material or molten resin of the same kind as or a different kind from the tire pieces 12A can be used.

The thickness of the crown portion 24 of the tire frame member 12 can be selected as appropriate for adjusting the bending elastic modulus and the like; however, taking into consideration the tire weight and the like, the thickness of the crown portion 24 may be, for example, from 0.5 mm to 10 mm, preferably from 1 mm to 5 mm, more preferably from 1 mm to 4 mm. Similarly, the thickness of the side portions 22 of the tire frame member may be, for example, from 0.5 mm to 10 mm, preferably from 1 mm to 5 mm. The thickness of the crown portion 24 and that of the side portions 22 of the tire frame member 12 can be measured as appropriate by a known method using a known device.

### (Adhesive Layer)

On the tire radial-direction outer side of the crown portion 24, the adhesive layer 18 is arranged in such a manner to encircle the crown portion 24 once in the tire circumferential direction. The adhesive layer 18 is a layer for binding the tire frame member 12 and the spiral belt layer 16, and the outer circumferential surface 24A (tire radial-direction outer surface) of the crown portion 24 and the tire radial-direction inner surface of the spiral belt layer 16 are adhered to the respective surfaces of the adhesive layer 18.

In this embodiment, the adhesive layer 18 is constituted by only an RFL-based adhesive that is an aqueous dispersion-based adhesive. The RFL-based adhesive can effectively adhere the tire frame member 12 made of a polyamide-based thermoplastic elastomer (i.e., formed using a polyamide-based thermoplastic elastomer as a main raw material) and the spiral belt layer 16 containing a rubber material.

The thickness of the adhesive layer 18 formed from the aqueous dispersion-based adhesive is preferably from 1 µm to 50 µm. When the thickness of the adhesive layer 18 is in this range, the tire frame member 12 and the spiral belt layer 16 can be sufficiently adhered with each other. In this embodiment, the adhesive layer 18 is formed in a single layer; however, the adhesive layer 18 may have a layered structure composed of two or more layers.

A means for forming the adhesive layer 18 on the surface of the crown portion 24 is not particularly restricted, and any known method can be employed as appropriate. For example, the adhesive layer 18 may be formed by applying the RFL-based adhesive yielding the adhesive layer 18 onto the crown portion 24 by coating or the like and subsequently heating the thus applied adhesive, or the adhesive layer 18 may be formed by pasting a belt-form adhesive layer 18 prepared in advance onto the crown portion 24 along the tire circumferential direction.

### (Reinforcing Layer)

On the tire radial-direction outer side of the crown portion 24, the spiral belt layer 16 is arranged via the adhesive layer 18 in such a manner to encircle the crown portion 24 once in the tire circumferential direction. The spiral belt layer 16 includes plural reinforcing cords 17. The reinforcing cords 17 are coated with a rubber material and spirally wound in the tire circumferential direction. In other words, the spiral belt layer 16 is formed by spirally winding the reinforcing cords 17 coated with a rubber material along the tire circumferential direction. It is noted here that the rubber material coating the reinforcing cords 17 assumes a substantially rectangular external shape. Further, in the spiral belt layer 16, the reinforcing cords 17 coated with the rubber material are arranged in parallel to one another along the tire widthwise direction. In this embodiment, as the rubber material, a conventional rubber composition for coating reinforcing cords can be used.

The thickness of the spiral belt layer 16 is not particularly restricted; however, it is, for example, preferably from 0.8 mm to 2.5 mm.

### (Tread Rubber)

As illustrated in FIG. 1, on the tire radial-direction outer side of the crown portion 24 and the spiral belt layer 16, the tread rubber 30 is arranged as a tread layer. The tread rubber 30 is disposed on and subsequently vulcanization-bonded to the tire frame member 12.

The tread rubber 30 is configured to contain a rubber having superior wear resistance than the resin material contained in the tire frame member 12, and a rubber of the same kind as a tread rubber used in a conventional rubber-made pneumatic tire can be used.

Further, on the surface of the tread rubber 30, water-draining grooves 30A extending in the tire circumferential direction are formed. In this embodiment, two grooves 30A are formed; however, the configuration is not restricted thereto, and a greater number of grooves 30A may be formed as well. As a tread pattern, any known tread pattern can be used.

In order to produce the tire 10 according to this embodiment, for example, first, a coating film is formed by applying an RFL-based adhesive onto the crown portion 24 of the tire frame member 12. The coating film of the RFL-based adhesive yields the adhesive layer 18 after the below-described vulcanization treatment. Next, on the coating film formed from the RFL-based adhesive, an unvulcanized spiral belt layer 16 is formed by spirally winding the reinforcing cords 17, which is coated with an unvulcanized rubber material, along the tire circumferential direction. Then, an unvulcanized tread rubber 30 is arranged on the unvulcanized spiral belt layer 16, and the resultant is subsequently heated to perform a vulcanization treatment, whereby the tire 10 according to this embodiment which sequentially includes, on the tire frame member 12: an adhesive layer 18 formed using the RFL-based adhesive; the spiral belt layer 16 including the reinforcing cords 17 coated with the rubber material; and the tread rubber 30 in the order mentioned can be obtained. It is noted here, however, that the method of producing the tire 10 according to this embodiment is not restricted to the above-described method.

### (Effects)

The effects of the tire 10 according to this embodiment will now be described. In the tire 10 according to this embodiment, the tire frame member 12 made of a resin (e.g., a polyamide-based thermoplastic elastomer) (i.e., the tire frame member 12 formed using a resin material as a main raw material) and the spiral belt layer 16 containing a rubber material are arranged via the adhesive layer 18 configured to contain an RFL-based adhesive. The RFL-based adhesive contained in the adhesive layer 18 provides an excellent adhesive strength between the polyamide-based thermoplastic elastomer and the rubber material and is thus capable of strongly binding the tire frame member 12 and the spiral belt layer 16. In addition, the tread rubber 30 and the spiral belt layer 16 are both configured to include a rubber-made member. Therefore, in this embodiment, an excellent adhesive strength is attained between the tread rubber 30 and the spiral belt layer 16. In this manner, since the tire frame member 12 and the spiral belt layer 16 as well as the spiral belt layer 16 and the tread rubber 30 are strongly adhered with each other, the tire 10 according to this embodiment has exceptionally high durability.

In the tire 10, since the spiral belt layer 16 is formed by spirally winding the rubber-coated reinforcing cords 17 in the tire circumferential direction, the rigidity of the outer circumferential surface 24A in the tire circumferential direction is improved. Moreover, because of the effects of the spiral belt layer 16 that is formed using at least the rubber-coated reinforcing cords 17, the growth of the crown portion 24 in diameter during tire rotation (a phenomenon that the crown portion 24 swells in the tire radial direction) is suppressed.

### (Second Embodiment)

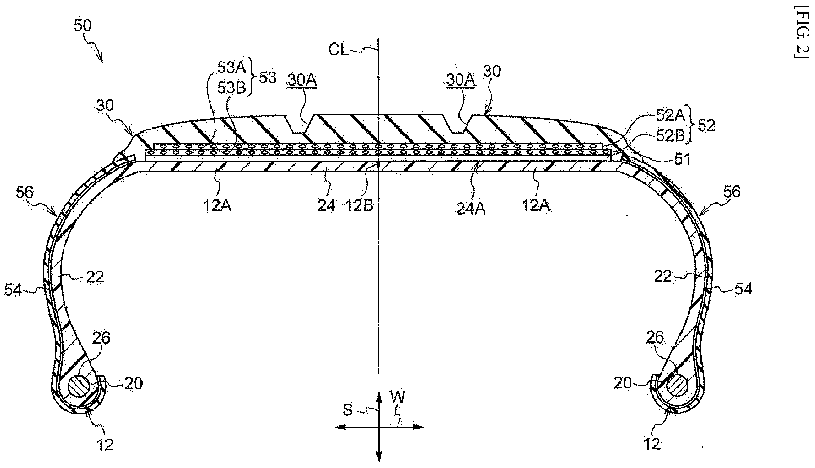

Next, the constitution of a tire according to the second embodiment will be described. FIG. 2 is a cross-sectional view illustrating the constitution of the tire according to the second embodiment, which is taken along the tire widthwise direction. In FIG. 2, those members common in the other drawing are assigned with the same symbols, and descriptions thereof are omitted. As illustrated in FIG. 2, a tire 50 according to the second embodiment includes: the tire frame member 12 made of a resin (e.g., a polyamide-based thermoplastic elastomer) (i.e., the tire frame member 12 formed using a resin material as a main raw material); an adhesive layer 51; an intersecting belt layer 52; reinforcing members 54; and the tread rubber 30.

### (Adhesive Layer)

In this embodiment, the adhesive layer 51 is arranged on the outer circumferential surface 24A of the crown portion 24. The adhesive layer 51 is a layer for binding the tire frame member 12 and the intersecting belt layer 52, and the outer circumferential surface 24A (tire radial-direction outer surface) of the crown portion 24 and the tire radial-direction inner surface of the intersecting belt layer 52 are adhered to the respective surfaces of the adhesive layer 51.

In this embodiment, the adhesive layer 51 is constituted by only an RFL-based adhesive that is an aqueous dispersion-based adhesive. As a resin material (adhesive) to be used in the adhesive layer 51, an adhesive used for adhering the resin material used in the crown portion 24 of the tire frame member 12 and the rubber material contained in a second intersecting belt layer 52B can be selected as appropriate in accordance with the types of these materials.

The thickness of the adhesive layer 51 formed from the aqueous dispersion-based adhesive is preferably in the same range as the one described as the thickness of the adhesive layer 18 in the first embodiment. When the thickness of the adhesive layer 51 is in the above-described range, the tire frame member 12 and the intersecting belt layer 52 can be sufficiently adhered with each other. In this embodiment, the adhesive layer 51 is formed in a single layer; however, the adhesive layer 18 may have a layered structure composed of two or more layers.

Further, the adhesive layer 51 of this embodiment is constituted by only an RFL-based adhesive; however, it is needless to say that the original object is achieved even if an additive(s) and/or a filler(s) is/are added to adjust the adhesive strength and the flexibility or the blending ratio thereof is modified.

A means for forming the adhesive layer 51 on the surface of the crown portion 24 is not particularly restricted, and any known method can be employed as appropriate. For example, the adhesive layer 51 may be formed by applying the adhesive yielding an adhesive layer 51 onto the crown portion 24 by coating or the like, or the adhesive layer 51 may be formed by pasting a belt-form adhesive layer 51 onto the crown portion 24 along the tire circumferential direction.

### (Intersecting Belt Layer)

On the outer circumferential surface 24A of the crown portion 24, the intersecting belt layer 52 is arranged via the adhesive layer 51 in such a manner to encircle the crown portion 24 once along the tire circumferential direction. The intersecting belt layer 52 has a layered structure in which the second intersecting belt layer 52B and a first intersecting belt layer 52A are sequentially disposed toward the tire radial-direction outer side. In this embodiment, the adhesive layer 51 is adhered with the tire radial-direction inner surface of the second intersecting belt layer 52B. In addition, in this embodiment, the tire radial-direction outer surface of the first intersecting belt layer 52A and the tread rubber 30 are vulcanization-bonded with each other.

The first intersecting belt layer 52A and the second intersecting belt layer 52B each include plural reinforcing cords 53 (first reinforcing cords 53A and second reinforcing cords 53B in FIG. 2). The reinforcing cords 53 are coated with a rubber material and arranged such that they are inclined with respect to the tire rotation axis. Further, the plural reinforcing cords 53 are arranged such that they are aligned at constant intervals along the tire circumferential direction.

The intersecting belt layer 52 has a layered structure including the first intersecting belt layer 52A and the second intersecting belt layer 52B. The first intersecting belt layer 52A and the second intersecting belt layer 52B include plural first reinforcing cords 53A and plural second reinforcing cords 53B, respectively. For example, the first intersecting belt layer 52A may be formed by arranging a belt-form member, in which the reinforcing cords 53B coated with a rubber material are embedded, in such a manner to encircle the tire once in the tire circumferential direction. Alternatively, the first intersecting belt layer 52A may be formed by arranging plural belt pieces, in each of which the reinforcing cords 53A coated with a rubber material are embedded, side by side along the tire circumferential direction. Similarly, the second intersecting belt layer 52B may be formed by arranging a belt-form member, in which the reinforcing cords 53B coated with a rubber material are embedded in such a manner to encircle the tire once in the tire circumferential direction. Alternatively, the second intersecting belt layer 52B may be formed by arranging plural belt pieces, in each of which the reinforcing cords 53A coated with a rubber material are embedded, side by side along the tire circumferential direction.

The thickness of the whole intersecting belt layer 52 having a layered structure is preferably from 1.6 mm to 5.0 mm. When the thickness of the intersecting belt layer 52 is in this range, a weight reduction effect attributed to rubber volume optimization is also attained, so that the fuel efficiency can be improved.

### (Reinforcing Member)

In this embodiment, a pair of reinforcing members 54 is arranged on the outer circumferential surface of the tire frame member 12. The reinforcing members 54 each include plural rubber-coated reinforcing cords. The reinforcing members 54 extend from the outer circumferential surfaces of the respective bead portions 20 of the tire frame member toward the outer surfaces of the side portions 22. The tire radial-direction outer ends of the reinforcing members 54 are positioned at the periphery of the tire widthwise-direction outer ends of the crown portion 24 and covered by the tire widthwise-direction outer ends of the tread rubber 30.

The reinforcing cords used in the reinforcing members 54 are monofilaments (single filaments) of organic fibers or multifilaments (stranded filaments) obtained by twisting organic fibers, and the reinforcing cords are arranged in parallel to each other along the tire circumferential direction, each extending in the radial direction. It is noted here that the reinforcing cords may be inclined at an angle of 10° or smaller with respect to the radial direction.

As the organic fibers, materials such as nylon, PET, glass, and aramid can be used. As a material of the reinforcing cords, a metal such as steel may be used as well. Further, in the reinforcing members 54, the reinforcing cords may be coated with a resin, not with a rubber.

On the outer surfaces of the reinforcing members 54, a pair of covering rubber layers 56 extending from the respective bead portions 20 of the tire frame member 12 to the tire widthwise-direction outer ends of the crown portion 24 are arranged. As the covering rubber layers 56, a rubber of the same kind as the one used in side walls of a conventional rubber-made pneumatic tire (i.e., tire formed using a rubber material as a main raw material) can be used. The tire radial-direction inner ends of the covering rubber layers 56 extend to the inner circumferential surfaces of the respective bead portions 20 of the tire frame member 12, and both ends of the reinforcing members 54 are thus covered by the covering rubber layers 56.

In order to produce the tire 50 according to this embodiment, for example, first, a coating film is formed by applying an RFL-based adhesive onto the outer circumferential surface 24A of the tire frame member 12. The coating film of the RFL-based adhesive yields the adhesive layer 51 after the below-described vulcanization treatment. Next, on the coating film thus formed using the RFL-based adhesive, an unvulcanized second intersecting belt layer 52B is arranged. Further, an unvulcanized first intersecting belt layer 52A is arranged on the unvulcanized second intersecting belt layer 52B. Then, an unvulcanized tread rubber 30 is arranged on the unvulcanized first intersecting belt layer 52A, and unvulcanized reinforcing members 54 and unvulcanized covering rubber layers 56 are arranged on the respective side portions 22. Thereafter, the resultant is heated to perform a vulcanization treatment, whereby the tire 50 according to this embodiment which sequentially includes, on the tire frame member 12: the adhesive layer 51 formed using the RFL-based adhesive; the intersecting belt layer 52 that has a layered structure and includes the reinforcing cords 53 coated with a rubber material; and the tread rubber 30 in the order mentioned, and in which the reinforcing members 54 are formed on the side portions, can be obtained. It is noted here, however, that the method of producing the tire 50 according to this embodiment is not restricted to the above-described method.

### (Effects)

The effects of the tire 50 according to this embodiment will now be described. In the tire 50 according to this embodiment, the tire frame member 12 made of a resin (e.g., a polyamide-based thermoplastic elastomer) (i.e., the tire frame member 12 formed using a resin material as a main raw material) and the intersecting belt layer 52 containing a rubber material are arranged via the adhesive layer 51 configured to contain an RFL-based adhesive. The RFL-based adhesive contained in the adhesive layer 51 provides an excellent adhesive strength between the polyamide-based thermoplastic elastomer and the rubber material and is thus capable of strongly binding the tire frame member 12 and the intersecting belt layer 52. In addition, the tread rubber 30 and the intersecting belt layer 52 are each configured to include a rubber-made member, and an excellent adhesive strength is thus attained therebetween. Therefore, since the tire frame member 12 and the intersecting belt layer 52 as well as the intersecting belt layer 52 and the tread rubber 30 are strongly adhered with each other, the tire 50 according to this embodiment has exceptionally high durability.

In the tire 50 according to this embodiment, a pantograph effect can be obtained since the intersecting belt layer 52 has a layered structure (two layers in this embodiment), and the first and the second reinforcing cords 53A and 53B, which are contained in the first and the second intersecting belt layers 52A and 52B superimposed with each other, respectively, are arranged in such a manner to be inclined to each other with respect to the tire rotation axis. Accordingly, in the tire 50, a shearing force in the tire circumferential direction, which is generated between the tread rubber 30 and the crown portion 24 during running due to the difference in diameter between the tread rubber 30 and the crown portion 24, is absorbed by the intersecting belt layer 52. As a result, a peeling force generated in the tire circumferential direction between the crown portion 24 and the intersecting belt layer 52 as well as between the intersecting belt layer 52 and the tread rubber 30 can be reduced.

In the tire 50 according to this embodiment, since the outer surface of the tire frame member 12 is covered by the reinforcing members 54, a reduction of the pressure resistance and the cutting resistance can be suppressed even when the tire frame member 12 is reduced in thickness.

Specifically, the cutting resistance can be improved by reinforcing the tire frame member 12 with the reinforcing members 54. In addition, since an internal pressure can be maintained by making the reinforcing members 54 bear some of the tension generated in the tire frame member 12, the pressure resistance can also be improved.

Further, the reinforcing members 54 can be easily processed since they are formed by coating reinforcing cords with a rubber. Moreover, the tire durability can be improved because of the high adhesiveness of the reinforcing members 54 with the covering rubber layers 56 and the tread rubber 30. By the presence of the covering rubber layers 56, deterioration of the reinforcing members 54 caused by UV radiation can be suppressed as well.

### (Other Embodiments)

Exemplary embodiments of the disclosure have been described thus far; however, the disclosure is not restricted thereto by any means, and various other embodiments are feasible within the scope of the disclosure.

For instance, in the second embodiment, the reinforcing members 54 are arranged in such a manner to extend and encircle the tire once in the tire circumferential direction; however, the reinforcing members may be formed by arranging plural reinforcing member pieces, which extend in the radial direction, in parallel to one another along the tire circumferential direction. In this case, when the reinforcing member pieces have a shape tapering toward an end positioned on the tire radial-direction inner side, there is no risk that the reinforcing members overlap with one another on the bead portion 20 side having a small diameter.

Moreover, the first embodiment and the second embodiment can be combined as appropriate. For instance, the reinforcing members 54 of the second embodiment can be provided on the outer surface of the tire frame member 12 of the first embodiment. Furthermore, in the first and the second embodiments, a mode in which an intersecting belt layer is formed by combining belt pieces is adopted; however, the disclosure is not restricted to this mode. For instance, a constitution in which an elongated belt-form intersecting belt layer is formed and this belt-form intersecting belt layer is arranged in such a manner to encircle the tire once in the tire circumferential direction may be adopted as well.

### EXAMPLES

The invention will now be described more concretely by way of examples thereof. It is noted here, however, that the invention is not restricted to the below-described Examples.

### [Example 1]

### (Preparation of Polyamide-based Thermoplastic Elastomer (TPA))

To a 50-liter pressure vessel equipped with a stirrer, a thermometer, a torque meter, a pressure gauge, a nitrogen gas inlet, a pressure regulator and a polymer outlet, 11.24 kg of 12-aminododecanoic acid, 3.21 kg of an ABA-type triblock polyether diamine (XTJ-542, manufactured by HUNTSMAN Corporation) and 0.67 kg of adipic acid were added.

Next, after sufficiently purging the inside of the pressure vessel with nitrogen, the internal pressure of the pressure vessel was adjusted to be 0.05 MPa while further supplying nitrogen gas, and the pressure vessel was heated from room temperature to 240°C. Subsequently, a polymerization reaction was performed at 240°C for 2 hours while maintaining the internal pressure of the pressure vessel at 0.05 MPa.

After the completion of the polymerization reaction, the flow rate of nitrogen gas was reduced, and the inside of the vessel was evacuated using a vacuum pump, after which polymerization was performed at 240°C for 5.5 hours to obtain a polyamide-based thermoplastic elastomer (TPA).

From the thus obtained polyamide-based thermoplastic elastomer, a molded article (resin piece) of 25 mm in width, 150 mm in length and 2.5 mm in thickness was prepared using an injection molding machine. The molding conditions and the like were adjusted such that molding defects such as voids did not occur in the molded article.

### (Rubber Member)

As a rubber member, a 2.5 mm-thick molded article (rubber piece) was prepared using a roll mill from a product of kneading unvulcanized 100% natural rubber (NR), a vulcanizing agent, a vulcanization accelerator and various rubber agents by a Banbury mixer.

### (RFL-Based Adhesive)

First, 9 g of resorcinol, 12 g of formaldehyde (a 37%-by-mass solution, manufactured by Japan Formalin Industrial Co., Ltd.) and 28 g of a 4%-by-mass NaOH (0.1 mol/l) solution were added and mixed in 217 g of soft water. Then, the resultant was mixed with 96 g of a styrene-butadiene (SBR) latex [(JSR2108, manufactured by JSR Corporation), 40%-by-mass latex] and 93 g of a vinylpyridine (VP) latex [PYRATEX (41%-by-mass latex)] that had been mixed in advance, and the resulting mixture was stirred for 1 hour to obtain a 20%-by-mass resorcinol-formalin latex solution. This was used as an RFL-based adhesive.

### (Preparation of Test Piece)

One surface of each of two resin pieces obtained above was treated for 1 minute using a sander (sandpaper), and 10 mg of the above-obtained RFL-based adhesive was subsequently brush-coated on each of the thus treated surfaces. Then, a single rubber piece obtained above was sandwiched between the two resin pieces thus coated with the RFL-based adhesive such that the coated surfaces came into contact with the respective sides of the rubber piece, and the two resin pieces were thereby pasted to the respective sides of the single rubber piece. The resultant was subsequently subjected to a vulcanization treatment (vulcanization conditions: 145°C, 2 MPa, 20 minutes), whereby a test piece having a thickness (µm) of the RFL-based adhesive (adhesive layer) as shown in Table 1 was prepared.

### [Comparative Example 1]

A test piece of Comparative Example 3 was prepared in the same manner as in Example 1, except that, after the 1-minute treatment of one surface of each of the two resin pieces using a sander (sandpaper), the two resin pieces were pasted to the respective sides of the single rubber piece without using the RFL-based adhesive, and that the resultant was subsequently subjected to a vulcanization treatment (vulcanization conditions: 145°C, 2 MPa, 20 minutes) to weld the resin pieces to the rubber piece.

### <Evaluations>

### (Adhesive Strength)

The adhesive strength was determined by a method according to JIS K6854-3: (1999). The test pieces of Example and Comparative Example were used as test samples, and the tensile strength at peeling (adhesive strength, kN/m) was determined by pulling each sample at 200 mm/min.

### (Peeling Interface)

Each peeled sample piece was visually observed to check a location(s) of breakage or peeling. A state where the rubber piece was broken was evaluated as "rubber cohesive failure", and a state where breakage (peeling) occurred between the rubber piece and a resin piece was evaluated as "interfacial peeling between rubber and resin".

**[Table 1]**

| | | Example 1 | Comparative Example 1 |
|---|---|---|---|
| Adhesive layer | | RFL-based adhesive | Heat welding (entanglement of molecules) |
| Thickness of adhesive layer (µm) | | 10 | none |
| Evaluation | Adhesive strength (kN/m) | 20 | 0.8 |
| | Peeling interface | Rubber cohesive failure | Interfacial peeling between rubber and resin |

The disclosures of Japanese Patent Application No. 2016-140564 is hereby incorporated by reference in its entirety.

All the documents, patent applications and technical standards that are described in the present specification are hereby incorporated by reference to the same extent as if each individual document, patent application or technical standard is concretely and individually described to be incorporated by reference.

## Claims

1. A tire comprising:
a tire frame member made of a resin;
a reinforcing layer that comprises plural reinforcing cords coated with a rubber material, and that is arranged on a tire radial-direction outer side of the tire frame member; and
an adhesive layer that comprises a resin material, and that is arranged between the tire frame member and the reinforcing layer.

2. The tire according to claim 1, wherein the adhesive layer is a layer containing an adhesive.

3. The tire according to claim 2, wherein the adhesive is a resorcinol-formalin-latex-based adhesive.
